(19) **Europäisches Patentamt European Patent Office Office européen des brevets**

(11) **EP 3 106 852 A1**

(12) **EUROPEAN PATENT APPLICATION**

(43) Date of publication:
21.12.2016 Bulletin 2016/51

(51) Int Cl.:
*G01K 17/02* (2006.01)  *G01K 17/20* (2006.01)

(21) Application number: 15172645.2

(22) Date of filing: 18.06.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **ETH Zurich**
**8092 Zurich (CH)**

(72) Inventors:
• **RUDOLF VON ROHR, Philipp**
**4056 Basel (CH)**
• **MEIER, Thierry**
**1260 Nyon (CH)**

(54) **HEAT FLUX SENSOR AND SYSTEM WITH A HEAT FLUX SENSOR**

(57) The invention relates to a heat flux sensor (100), comprising at least one sensing element consisting of thermoelectric materials (1, 2, 3, 4) having at least two thermoelectric junctions ($T_1$, $T_2$, $T_3$) between thermoelectric materials (1, 2, 3, 4), with a means, in particular at least three lead wires (61, 62, 63, 64) for acquiring at least two electric thermoelectric junction signals independently from the at least two thermoelectric junctions ($T_1$, $T_2$, $T_3$), the acquired electric thermoelectric junction signals being transmittable to data processing device (20) for determining heat flux data.

Fig. 15

**Description**

The invention relates to the heat flux sensor with the features of claim 1. The invention also relates to systems with the features of claim 14 and 15.

The present invention results from the need for millimeter scale heat flux sensors, which are chemically resistant, mechanically robust and have a low - if possible negligible - thermal inertia.

These heat flux sensors should be reliable even when the incident heat flux has a non-uniform distribution over the heat flux sensor surface (i.e. local variation of the incident heat flux) and / or when the temperature distribution in the heat flux sensor is asymmetric e.g. the sensor is not centered with respect to the heat flux source, resulting in a two-dimensional heat flux field. For instance, different heat flux distributions with possibly primary and secondary local maxima can be generated by a flame-jet impinging on a surface.

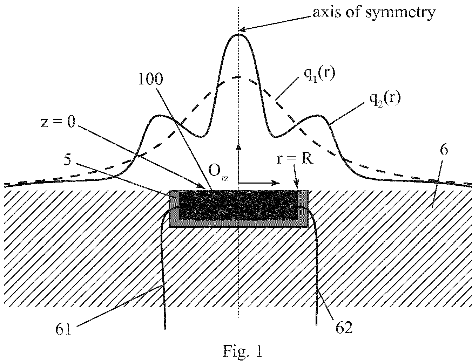

Referring now to Fig. 1 which schematically shows a generic heat flux sensor 100 and its insulator 5, the heat flux sensor 100 is flush-mounted with a ceramic material as external environment 6. Flush-mounted in this context means that the surface of the ceramic material of the external environment 6 and the surface of the heat flux sensor 100 are essentially at the same level (z = 0).

In the evaluation of the thermal stresses produced by a heat source, e.g. a flame-jet, the absorbed heat flux is an important quantity as the resulting stresses are proportional to the thermal expansion mismatch. In Fig. 1, two heat flux distributions ($q_1$ and $q_2$) that could be produced by the flame-jet are schematically shown. For the purpose of the example, the two distributions are axisymmetric and lead to the same area averaged heat flux on the surface of the heat flux sensor ($\bar{q}$) such that Eq. 1:

$$\bar{q} = \frac{1}{2R}\int_{-R}^{R} q_1\,(r)dr = \frac{1}{2R}\int_{-R}^{R} q_2\,(r)dr, \qquad (1)$$

holds. However, the shape of the distributions differs in both cases (i.e. $\exists\, r, r \in [-R,R] \wedge q_1\,(r) \neq q_2\,(r)$) leading to two different temperature distributions in the sensing element of the generic heat flux sensor 100. An ideal sensing element, part of the heat flux sensor 100 produces a signal proportional to $q$, i.e. the same when exposed to $q_1$, $q_2$ or any other distribution which average leads to $q$.

In the following, the performances of some known heat flux sensors (i.e. slug-calorimeter, water cooled calorimeter, Gardon gauge, transverse heat flux sensor, thermopile and thin film sensors) with respect to the preceding problem are briefly reviewed.

Slug calorimeter: (e.g. Childs, P. R. N., J. R. Greenwood, and C. A. Long. "Heat flux measurement techniques." Proceedings of the Institution of Mechanical Engineers, Part C: Journal of Mechanical Engineering Science 213.7 (1999): 655-677.)

A transient sensor, such as the slug-calorimeter, cannot be considered for the measurement of the heat flux to the ceramic material 6 due to the time resolution of the data acquisition required (especially at high heat flux on a substrate with a low thermal conductivity) and complications thereof. Moreover, no insight in the heat flux at steady state is provided by such a sensor, which limits its application to transient phenomena.

Water calorimeter: (e.g. ASTM E422 - 05(2011) Standard Test Method for Measuring Heat Flux Using a Water-Cooled Calorimeter)

A water cooled calorimeter is also discarded: to minimize the uncertainty of the measurement, a highly conductive material (i.e. copper or any other material with a high thermal conductivity) is used for the sensor. Additionally, an intense heat sink is connected to its back. Therefore the sensor will greatly modify the temperature distribution in the external environment 6 and the measured heat flux is unlikely to represent the one on the refractory material 6 in the absence of the sensor, which is the quantity of interest.

Gardon gauge: (Gardon, Robert. "An instrument for the direct measurement of intense thermal radiation." Review of Scientific Instruments 24.5 (1953): 366-370.)

A Gardon gauge is completely built from thermoelectric materials, without additional insulating elements to separate its thermoelectric junctions. This gauge is however sensitive to lateral temperature gradients and will produce a different signal when exposed to the two heat flux distributions ($q_1$ and $q_2$) presented in Fig. 1 - despite both result in the same area averaged heat flux ($q$) and should lead to the same sensor signal. The differential thermocouple signal (i.e. sensing element signal), transmitted by the two lead wires, does not allow the measurement of its thermoelectric junctions independently, hindering a correction of its sensitivity with respect to temperature. Due to its sensitivity to lateral temperature gradients, this gauge requires extreme care when applied to convection (or mixed heat transfer problems) and is discarded for the evaluation of the heat flux to the ceramic facing the flame-jet.

Transverse heat flux sensor: (e.g. Zahner, Th, R. Förg, and H. Lengfellner. "Transverse thermoelectric response of a tilted metallic multilayer structure." Applied Physics Letters 73.10 (1998): 1364-1366.)

A transverse heat flux sensor is robust and can be manufactured thin enough, to prevent disturbances in the temperature distribution of the refractory material. However, similarly to the Gardon gauge, it will produce a different signal when exposed to the two heat flux distributions (Fig. 1). Moreover, for each distribution ($q_1$ and $q_2$), the sensor will produce a different signal when moved by $\pm \Delta r$ with respect to its centered position (r = 0, z =flush-mounted). This is due to its anisotropic thermoelectric properties which results in an asymmetric behavior (i.e. its anisotropic thermal conductivity results in an asymmetric temperature distribution and thus in two different signals as moved by $\pm \Delta r$.). The transverse heat flux sensor is therefore not suited for this flame-impingement heat transfer study.

Thermopile: (e.g. Gifford, Andrew R., et al. "Durable heat flux sensor for extreme temperature and heat flux environments." Journal of Thermophysics and Heat Transfer 24.1 (2010): 69-76.)

Due to its construction, a thermopile is less sensitive to the heat flux distribution than a transverse sensor or a Gardon gauge. Indeed, the thermopile generates a signal proportional to the average absorbed heat flux and will produce the same signal when facing $q_1$ or $q_2$. Its thermoelectric junctions are commonly formed alternately on each side of an insulator, i.e. the insulator separates spatially consecutive thermoelectric junctions, and connected in series to generate the signal, i.e. proportional to the number of junctions and their respective temperature. However, the electric insulator used in the manufacturing of the thermopile (for example a ceramic) and its bond to the thermoelectric materials suffer from thermal stresses (expansion mismatch), and / or oxidation. This limits the conditions at which the sensor can be used. Moreover, thermopiles, without considering thin film construction, discussed hereafter, tend to be significantly thicker than transverse sensors or Gardon gauges - the sensitivity of a thermopile is function of the number of its thermoelectric junctions connected in series and the heat resistive layer formed by the sensor. The additional heat resistive layer, represented by the sensor will modify the temperature distribution in the ceramic material 6 (i.e. the heat flux field). Thus, the thermopile is also discarded to assess the heat flux to the refractory material 6.

Thin film heat flux sensors:

The sensing element of a thin film heat flux sensor (e.g. US 5.990.412) uses generally two different physical principles to measure the heat flux, either:

1. A Wheatstone bridge is deposited on a non-electrically-conductive substrate (i.e. substrate comprising dielectric material) and two of its resistances are coated with an additional heat resistive layer, such that the output of the bridge responds to the temperature differential across its two pairs of resistances. After calibration, the bridge output (i.e. the sensor signal) can be converted to a heat flux. Or,

2. Thermoelectric junctions are deposited on a non-electrically-conductive substrate (i.e. substrate comprising dielectric material) and some of them are coated with an additional heat resistive layer. The geometry of the insulation layer is such that thermoelectric junctions are connected in series alternating junctions on each side of the heat resistive layer.

In both cases, thin film sensors do not disturb the heat flux field in the ceramic 6 due to their limited thickness and low thermal inertia (i.e. the temperature distribution in the refractory material remains unaffected by the presence of the sensor). Therefore, both can be characterized as ideal heat flux sensors. However, as a consequence of a trade-off in the choice of the substrate material: either for oxidative environment or for high heat flux applications, no thin film sensor can sustain a high heat flux produced in an oxidative environment at high temperature. These conditions are for instance encountered in the flame-jet heat transfer study.

The foregoing disadvantages of prior devices are overcome according to the principles of the present invention which provides a universal heat flux sensor with embedded temperature measurement probes able to sustain the heavy thermal loads imposed by a flame-jet and remains mostly insensitive to lateral temperature gradients.

Therefore, the task exists to find a better heat flux sensor. This task is solved by a heat flux sensor with the features of claim 1.

The heat flux sensor comprises at least one sensing element consisting of thermoelectric materials having at least two thermoelectric junctions between thermoelectric materials, with a means, in particular at least three lead wires for acquiring at least two electric thermoelectric junction signals independently from the at least two thermoelectric junctions, the acquired electric thermoelectric junction signals being transmittable to data processing device for determining heat flux data.

The heat flux sensor comprises thermoelectric material forming thermoelectric junctions and means (e.g. three lead wires) for acquiring signals independently from the thermoelectric junction also only consisting of thermoelectric materials.

The data acquired from the thermoelectric junctions can be transmitted to the data processing device such as e.g. a computer. The data processing device can convert e.g. the measured voltage or current data into heat flux data in a generally known way, i.e. the data are converted to a heat flux using the calibration curve of the sensor, similarly as a voltage is converted to temperature for a thermocouple.

In a further embodiment of the heat flux sensor the means for acquiring the electric thermoelectric junction signals, in particular the at least three lead wires, solely consist of thermoelectric materials matching the thermoelectric materials of the at least one sensing element. By this no additional thermoelectric junctions are created and the transmitted signals are solely generated in the sensing element of the heat flux sensor. This prevents the creation of additional thermoelectric junctions at the connection of the lead wires to the sensing element.

In one embodiment of the heat flux sensor the temperature of at least one of the thermoelectric junctions is used to correct the sensitivity of the heat flux sensor with respect to temperature. The heat flux sensor temperature has an effect on the heat flux measurement. For example a heat flux of 10 kW/m$^2$ will not produce the same sensing element signal at 20°C than at 1000°C. This is because the thermal conductivity is temperature dependent. This can be resolved only with at least two independently obtained electric thermoelectric junction signals, i.e. to correct the sensitivity of the heat flux sensor with respect to temperature. This allows to account for the (average) heat flux sensor temperature in its sensitivity, used for the conversion of the heat flux sensor signal to heat flux data.

In a further embodiment of the heat flux sensor the temperature of at least two thermoelectric junction is used to cross-check the value of the heat flux measured by the sensing element, in particular based on Fourier's law or an empirical relation between the heat flux and the temperature distribution.

Embodiments of the heat flux sensor can have thermoelectric junctions having defined contact area, in particular a point-like contact area, an annular contact area, or a surface-like contact area. Those geometries allow the construction of complex and / or compact heat flux sensors.

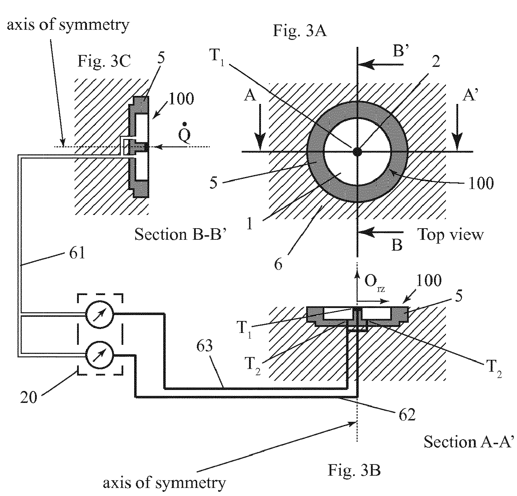

In a further embodiment thermoelectric junctions are positioned symmetrically to give the heat flux sensor a symmetrical behavior as moved by $\pm \Delta r$ with respect to its centered position (r = 0) with the axis of symmetry of the heat flux source (see Fig. 3B, 3C). When its construction is symmetric, the heat flux sensor will produce the same signal for the different incident heat flux distribution $q_1$ and $q_2$ (see Fig. 1).

Alternatively an embodiment of heat flux sensor comprises thermoelectric junctions which are positioned asymmetrically in the heat flux sensor such as to maximize its sensitivity to an asymmetric temperature distribution. With such a configuration the direction of the heat flux can be investigated.

In a further embodiment it is possible, that a part of at least one heat flux sensor is configured and designed to be used as a heating element, in particular through Joule heating (resistive heating), when current is flowing through it. This embodiment allows an additional use of the heat flux sensor.

It is also possible that an embodiment of the heat flux sensor is using at least one thermoelectric material as a thermistor to measure temperature.

In further embodiments at least one sensing element, and / or the electrical insulator have defined surface geometries, in particular concave or convex. The surface geometry of the sensing element can be matched to the surface into which the heat flux sensor is implemented. For example it could smoothly fit a wing profile without disturbing the flow. Or it could be flush-mounted with the blades of a turbine.

In one embodiment it is possible that different thermoelectric materials are connected by diffusion welding. Alternatively or additionally it is possible that the electrical insulator is connected to the sensing element by vacuum soldering.

Heat flux sensor according to at least one of the preceding claims, wherein wires are connected by laser welding.

The heat flux sensor comprises at least one sensing element consisting of thermoelectric materials having at least two consecutive thermoelectric junctions between the thermoelectric materials, with a means, in particular at least three lead wires for acquiring at least two electrical signals (e.g. electric thermoelectric junction signals) independently from the at least two thermoelectric junctions. The acquired signals being transmittable to a data processing device for determining heat flux data. The heat flux sensor provides at least two electrical signals which form the basis for the determination of a heat flux.

The task can also be solved by a system with the features of claim 14. Those systems comprise at least one heat flux sensor according to at least one of the claims 1 to 13. The heat flux sensors determine the incident heat flux, the temperature, the temperature profile and / or the dissipated heat. Those measurements can be applied to systems, in particular fluid systems, comprising at least one aerodynamic profile, at least one gas turbine blade, at least one spacecraft wing, at least one aircraft wing, a chemical reaction vessel, a reaction vessel with a stirrer system, a nuclear reactor, a piping system of a concentrated solar installation, a well casing, in particular a geothermal well, and / or a control system, in particular a cascade control loop to improve the control quality of a system.

Embodiments of such systems can be used for the analysis of a combustion system, in particular without optical access, specifically:

(a) to characterize the heat transfer and the wall temperature at different locations along a combustion chamber, and / or

(b) to measure the axial temperature profile in a combustion chamber.

The heat flux sensors in the system can also be used in igniting a flame in a water-like environment as in:

(c) supercritical water oxidation,
(d) flame-jet drilling.

**Brief description of the drawings**

For a complete understanding of the present invention reference should now be had to the following description of the same taken in conjunction with the accompanying drawings wherein:

Fig. 1      schematically shows a generic heat flux sensor exposed to two different heat flux distributions;
Fig. 2A     a schematic top view of a first embodiment of a heat flux sensor;
Fig. 2B     a sectional view along the line A-A' in Fig. 2A;
Fig. 2C     a sectional view along the line B-B' in Fig. 2A;
Fig. 3A     a schematic top view of a second embodiment of a heat flux sensor;
Fig. 3B     a sectional view along the line A-A' in Fig. 3A;
Fig. 3C     a sectional view along the line B-B' in Fig. 3A;
Fig. 4A     a schematic top view of a third embodiment of a heat flux sensor;
Fig. 4B     a sectional view along the line A-A' in Fig. 4A;
Fig. 4C     a sectional view along the line B-B' in Fig. 4A;
Fig. 4D     a sectional view along the line C-C' in Fig. 4A;
Fig. 5      a schematic cross section of a fourth embodiment of a heat flux sensor;
Fig. 6A-I   some manufacturing steps for assembling a heat flux sensor;
Fig. 7      a perspective view of an embodiment of a fluid system, i.e. a wing section with heat flux sensors;
Fig. 8A     a sectional view of a reactor vessel;
Fig. 8B     a top view of the reactor vessel shown in Fig. 8A indicating the sectional plane for the view shown in Fig. 8A;
Fig. 8C     a perspective view of the reactor vessel shown in Fig. 8A and 8B;
Fig. 9A     a sectional view of a combustion chamber;
Fig. 9B     a perspective view of the combustion chamber;
Fig. 9C     a top view of the combustion chamber indicating the sectional plane for the view in Fig. 9A;
Fig. 10A    a perspective view of a concentrated solar power plant with heat flux sensors;
Fig. 10B    a sectional view of the concentrated solar power plant according to Fig. 10A;
Fig. 11A    a sectional view of a casing of a well, e.g of a geothermic well;
Fig. 11B    a perspective view of the casing according to Fig. 11A;
Fig. 12A    a detail of a wall of a vessel with two embodiments of the heat flux sensor;
Fig. 12B    an embodiment of cascaded control system for the vessel shown in Fig. 12A;
Fig. 13     a view of an experiment in which a heat source is directed to a plane surface with a heat flux sensor in the middle;
Fig. 14     a view of a heat flux sensor in heating mode;
Fig. 15     schematically shows an embodiment of a heat flux sensor;

**Detailed description**

Before different embodiments of the invention are described in an exemplary way, certain technical terms are defined. These definitions apply to the complete specification and all embodiments.

**Heat transfer**

Heat transfer describes the exchange of thermal energy, between physical systems depending on the temperature and pressure, by dissipating heat. The fundamental modes of heat transfer are conduction or diffusion, convection and radiation. These modes can be combined depending on the system.

**Impingement heat transfer**

Impingement heat transfer describes the heat transfer occurring between a fluid and a solid material due to convection, radiation and other mechanisms. In this patent application, the term is specifically used to describe a fluid impinging orthogonally to a solid surface.

**Thermoelectric material**

A thermoelectric material 1, 2, 3, 4 is any material (e.g. cobalt, alumel, palladium, aluminum, lead, silver, zinc, gold, tungsten, iron, chromel, copper, nickel, platinum, etc., a mixture of these or a synthetic material) which, when exposed to a temperature distribution, generates an electrical signal (i.e. voltage, current) due to the movement of its electron(s). This effect is known as the Seebeck effect.

**Thermoelectric junction**

A thermoelectric junction $T_1$, $T_2$, $T_3$ is a contact between two thermoelectric materials 1, 2, 3, 4. The thermoelectric junctions $T_1$, $T_2$, $T_3$ may have different defined surface area geometries such as: point-like, annular, surface-like, etc..
A point-like area junction refers specifically to the connection of two wires in one point. An annular area junction refers specifically to the circumferential connection of a wire in the hole of a second thermoelectric material at one of the hole ends and ideally forming a line. A surface area junction denotes the connection of two thermoelectric materials by a direct contact of their surfaces.

**Incident heat flux**

The incident heat flux is the thermal energy emitted by a heat flux source per unit time reaching the sensor per unit area. It is not completely transferred by conduction across the sensor as one part is radiated.

**Absorbed heat flux**

The absorbed heat flux is the thermal energy transferred by conduction across the heat flux sensor. It corresponds to the magnitude of the heat flux field.

**Sensitivity**

The sensitivity of a heat flux sensor 100 is the ratio of the response of its sensing element (U [V]) to the absorbed heat flux (q [kW/m$^2$]) such that $S = U/q$.

**Flame-jet**

In this patent application, a flame-jet describes a hot, usually luminous body of burning gas and / or supercritical species, typically produced by a jet of ignited fuel and oxidizer in different atmospheres. The flame-jet can transfer heat by convection, conduction, radiation, mixed heat transfer phenomena, radicals recombination and other mechanisms to a heat sink (e.g. comprising a heat flux sensor 100).

**External environment**

Everything outside the heat flux sensor 100 (comprising at least one sensing element and means for acquiring the electric thermoelectric junction signals from the at least one sensing element) and its electrical insulator 5, e.g. the data processing system 20 is considered as the external environment.
Now different embodiments of heat flux sensors 100 and their applications in systems, in particular fluid systems are described.
The progresses in electronics in the last decades reduces the influence of the sensitivity of a heat flux sensors to produce reliable heat flux data. This permits to design symmetric heat flux sensors with less thermoelectric junctions, resulting in sensors easier to manufacture with potentially higher spatial resolution and a broad operational range (e.g. from 1 kW/m$^2$ to 100 kW/m$^2$, 60 kW/m$^2$ to 1MW/m$^2$, 600 kW/m$^2$ to 100MW/m$^2$ at temperatures from -100 °C to 1400 °C, -10 °C to 650 °C, 600 °C to 4000 °C).
The heat flux sensor 100 according to the present invention is based on the principle that certain materials (e.g. charge carriers with thermoelectric properties), under the effect of a non-uniform temperature distribution (i.e. non trivial heat flux field), generate an electric signal. Thus if heat is applied to a surface with an embedded heat flux sensor 100 such as to generate a non-uniform temperature distribution in the sensing element, the later will produce a signal proportional to the temperature distribution in its sensing element (e.g. the mean temperature of the sensing element and the averaged absorbed heat flux).

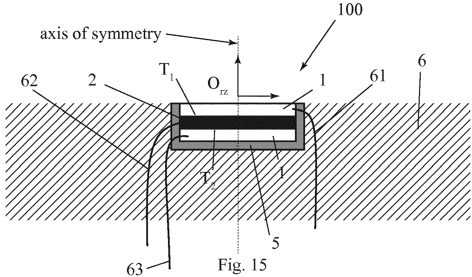

Referring now to Fig. 15 showing a heat flux sensor 100. The heat flux sensor 100 comprises at least one sensing element. The sensing element is solely built of thermoelectric materials 1, 2, 3, 4 with a least two thermoelectric junctions $T_1$, $T_2$ (which are consecutive here). At the thermoelectric junctions electric thermoelectric signals are generated which are acquired independently (i.e. each signal in a separate channel) by means such as e.g. lead wires 61, 62, 63, 64 to a data processing system 20. The at least one sensing element is separated from the external environment 6 by an electrical insulator 5, as can be seen e.g. in Fig. 15, 2 or 3.

The heat flux sensor 100 can have some or all of the following characteristics:

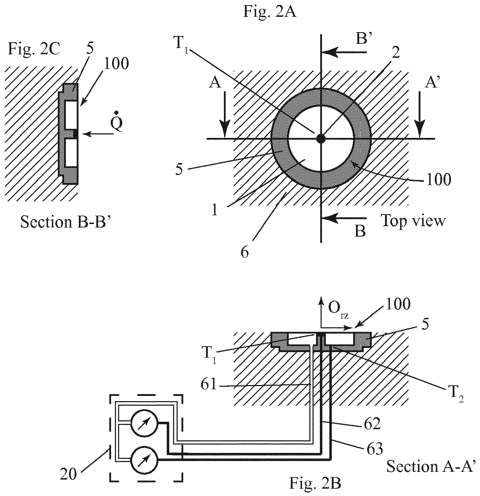

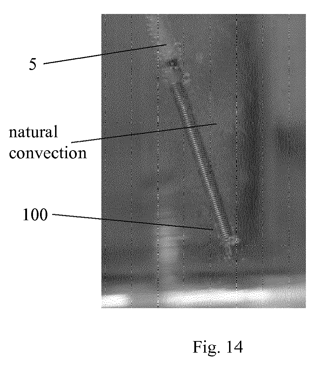

1. The sensing element is built without any electrical insulator 5 separating spatially consecutive thermoelectric junctions i.e. maximizing the contact area of the different thermoelectric junctions.
2. At each thermoelectric junction $T_1$, $T_2$, $T_3$, an electric thermoelectric junction signal proportional to the temperature can be acquired.
3. The locations of the thermoelectric junctions $T_1$, $T_2$, $T_3$ can be symmetric (best seen in Fig. 3B, 3C, 4B and 15) to produce an electrical signal proportional to the average incident heat flux.
4. The location of the thermoelectric junctions $T_1$, $T_2$, $T_3$ can be asymmetric (best seen in Fig. 2B) to produce an electric thermoelectric junction signal dependent on the direction of the heat flux field.
5. It can be thin enough to prevent any disturbance to the temperature distribution in the target material and measure the incident heat flux before it relaxes.
6. It can be used to dissipate heat by Joule heating (see e.g. Fig. 14).

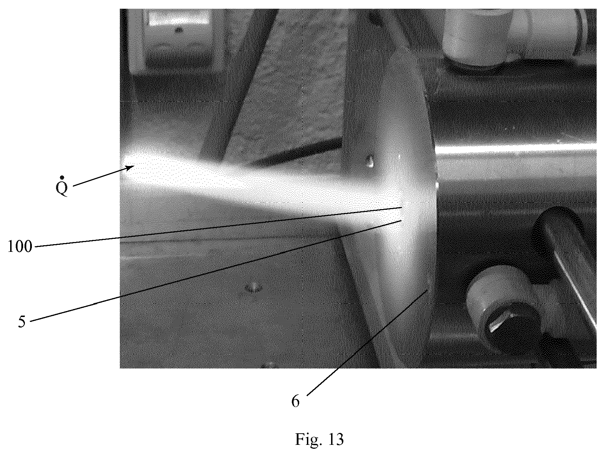

Using appropriate electronic devices, the heat flux sensor 100 is able to detect a heat flux as small as the one produced by the thumb of a human being ($\approx$ 37 °C) pressed on its surface initially at room temperature ($\approx$ 25 °C). The same sensor can also be exposed to the highly exothermic flame-jet produced by the fast oxidation of acetylene with pure oxygen (see e.g. Fig. 13); a flame-jet with temperatures well in excess of 1000 °C. Moreover, it can be used in contact with supercritical water P $\geq$ 221 bar and T $\geq$ 374 °C, a fluid typically known for its intense oxidative properties.

In accordance with embodiments of the present invention two or more thermoelectric junctions $T_1$, $T_2$, $T_3$ produce a signal proportional to their temperature. These signals are interpreted to get the temperature of the thermoelectric junctions $T_1$, $T_2$, $T_3$ and are combined to get a signal proportional to the heat flux. The thermal resistive layer, composed by one of the thermoelectric materials 1, 2, 3, 4 is thin enough to prevent disturbances in the heat flux and thick enough to produce a detectable temperature differential with the available electronic; i.e. leading to a reliable heat flux measurement. The temperature differential has to be measured as close as possible to the surface to capture as much as possible of the incident heat flux before it relaxes.

The geometry of the heat flux sensor 100 (measuring area to thickness ratio, etc.) may be tuned to fit different needs resulting in a sensing element with a mass of 1 mg to 1 g, of 500 mg to 5 g, of 2 g to 10 g, of 8 g to 100 g, of 70 g to 5 kg.

In another embodiment (see Fig. 14), the heat flux sensor 100 can be used to dissipate heat, i.e. to start a chemical reaction, before its use as a heat flux sensor with embedded temperature measurement probes. The thermoelectric material can have sufficient resistivity to dissipate heat by Joule heating. This is can be used to ignite a flame at 260 bar in water. As a solid state relay is opened, the temperature at the tip can be measured.

Basically then, the present invention can comprise:

(1) first thermoelectric junction $T_1$ for generating first electric thermoelectric junction signal responsive to first temperature,
(2) second thermoelectric junction $T_2$ for generating second electric thermoelectric junction signal responsive to second temperature,
(3) the lead wiring 61, 62, 63 made of respectively the same thermoelectric materials 1, 2 to transmit the electric thermoelectric junction signals to the data processing device 20 for converting a voltage signal into a heat flux measurement value (e.g. the sensitivity is S=U/q, therefore the heat flux is q=U/S) and,
(4) an electrical insulator 5 to prevent electrical contact between the sensing element and the external environment 6.

Referring now to Fig. 2A to 2C which presents three views of a first embodiment of the invention with a possible measurement circuit represented in block form. Fig. 2A schematically shows a top view, Fig. 2B and 2C show sectional views along lines A-A' and B-B' respectively.

In the embodiment shown in Fig. 2A to 2C the first thermoelectric material 1 is connected to the second thermoelectric material 2 forming the annular thermoelectric junction $T_1$ and the point-like thermoelectric junction $T_2$. At one point the first thermoelectric material 1 extends into a lead wire 61 leading to the data processing device 20. The second thermoelectric material 2 consists only of wires and is connected once at its periphery *(at z $\approx$ 0)* to form the

annular thermoelectric junction $T_1$ and once at its end to form the point-like junction $T_2$. Lead wires 62 and 63 made from the same second thermoelectric material 2 are leading to the data processing device 20.

Therefore, two thermoelectric junctions $T_1$, $T_2$ are formed. The first thermoelectric junction $T_1$ is formed between the two thermoelectric materials 1, 2, at the surface of the sensing element ($z \approx 0$). The second thermoelectric junction $T_2$ is formed at the contact point of the wire 63 made of the second thermoelectric material 2 with the back side of the first thermoelectric material 1. Therefore, the sensing element only comprises thermoelectric materials 1, 2 (i.e. here the annular pad and the lead wires). The heat $\dot{Q}$ providing the heat for the heat flux measurement would be directed to the heat flux sensor 100 as shown in Fig. 2C.

Hence, a first thermoelectric material 1 is connected to a second thermoelectric material 2 featuring a different Seebeck coefficient from said first thermoelectric material 1 - thus forming two thermoelectric junctions: a first thermoelectric junction $T_1$ (annular) and a second thermoelectric junction $T_2$ (point-like).

The electrical insulator 5 represents a material isolating the electric charges (e.g. electron(s)) of the sensing element from the external environment 6.

Referring now to Fig. 3A to 3C, which present a second embodiment as variation of the first embodiment. Fig. 3B and 3C are sectional views along the lines indicated in Fig. 3A.

The first thermoelectric material 1 is connected to the second thermoelectric material 2 featuring a different Seebeck coefficient from said first material - thus forming the annular thermoelectric junction $T_1$ (best seen in Fig. 3A) and the array of thermoelectric junctions $T_2$ (best seen in Fig. 3B).

In Fig. 3A to 3C, the heat flux sensor is comprising: two thermoelectric materials 1, 2, two thermoelectric junctions $T_1$, $T_2$ and the lead wires 61, 62, 63 made of the respective thermoelectric materials.

Additionally, the array of the thermoelectric junctions $T_2$ is symmetric with respect to said junction $T_1$ (see Fig. 3B); such as to damp the disturbances produced by local variations of the incident heat flux in the heat flux sensor 100. The heat flux sensor 100 will produce a signal proportional to the average incident heat flux, independently of its local variations. Disturbances and local variations will typically occur when the heat flux sensor 100 is not properly centered with respect to the incident heat flux and enhanced the more concentrated the heat flux source is.

According to the dimensions of the heat flux sensor 100 and the manufacturing technique, more junctions can be connected to the array of thermoelectric junctions $T_2$ - ultimately forming an annular thermoelectric junction. The number and the position of the junctions forming the array $T_2$ can be used to render the sensor sensitive to the direction of the heat flux and thus investigate the heat flux direction (best seen in Fig. 2B), or in contrary to make it independent of the heat flux field and measure the averaged incident heat flux (best seen in Fig. 3B).

The electrical insulator 5 represents a material isolating the electric charges (i.e. electron(s) but not only) from the external environment 6. The said external environment 6 encompasses everything but the second embodiment of the invention and its electrical insulator 5.

The manner in which the first two embodiments operate to determine the heat flux will now be described.

The voltage produced by thermoelectric junction $T_2$ (or array of thermoelectric junctions $T_2$) may be subtracted from the voltage produced by the thermoelectric junction $T_1$. The said signal may be translated to a heat flux after calibration and / or after theoretical consideration. A calibration relates a known incident heat flux, to the electrical signals produced by the heat flux sensor 100. The computation can be carried out by the data processing device 20 which is shown in Fig. 2 and 3 (but not in the other figure for the sake of brevity). A theoretical consideration may be:

> (1) Fourier's law or
> (2) any other description of the heat conduction in a material based on its thermophysical properties and the temperature distribution present in said material.

A second way to measure a signal proportional to the heat flux with the first and second embodiments is to use them as a differential thermocouple; this is achieved by measuring directly the voltage difference across lead wires 62, 63.

In addition to the measurement of a signal proportional to the heat flux, the first two embodiments of the heat flux sensors 100 offer the possibility to measure the signal from thermoelectric junction $T_1$ and / or junction $T_2$ independently. This signal can be translated to a temperature by appropriate calibration and / or theoretical consideration. Among others, the knowledge of the temperature at the thermoelectric junctions $T_1$, $T_2$ used to measure the heat flux allows to account for the material properties (i.e. thermoelectric properties) in the sensitivity (i.e. signal to heat flux ratio) of the heat flux sensor. Therefore, the systematic uncertainty on the measured property (i.e. the heat flux) can be reduced using the embedded temperature measurement.

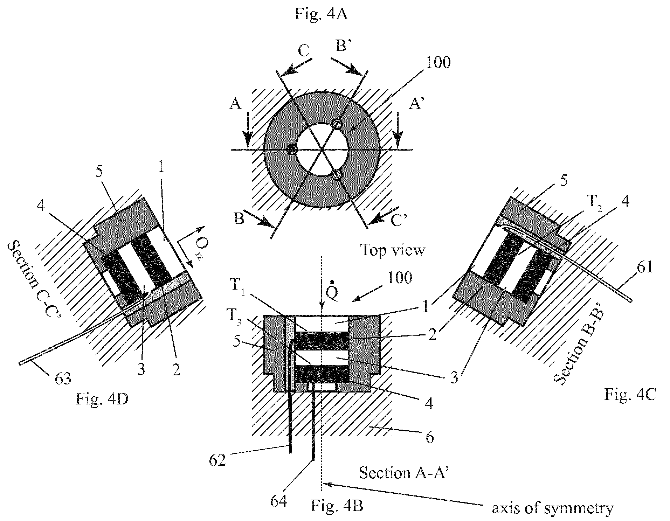

Referring now to Fig. 4A to D showing a third embodiment of the invention. Fig. 4B to 4D are sectional views along the lines indicated in Fig. 4A.

Here a cylindrical stack of thermoelectric materials 1, 2, 3, 4 is used to form surface-like thermoelectric junctions $T_1$, $T_2$, $T_3$, as best be seen in Fig. 4B.

A first thermoelectric material 1 - having essentially a cylindrical shape - is connected to a similarly shaped second thermoelectric material 2 featuring a different Seebeck coefficient from first thermoelectric material 1 - forming a surface-like thermoelectric junction $T_1$ which is located below the first thermoelectric material 1 (see Fig. 4B).

The second thermoelectric material 2 is connected to a similarly shaped third thermoelectric material 3 featuring a different Seebeck coefficient from the second thermoelectric material 2 - forming a surface-like thermoelectric junction $T_2$, which is situated below the first two thermoelectric materials 1, 2 (see Fig. 4C).

The third thermoelectric material 3 is connected to a similarly shaped fourth thermoelectric material 4 featuring a different Seebeck coefficient from said third material - forming a surface-like thermoelectric junction $T_3$, which is situated below the first three thermoelectric materials 1, 2, 3 (see Fig. 4B).

Hence, the heat flux sensor 100 is comprising four thermoelectric materials 1, 2, 3, 4, three thermoelectric junctions $T_1$, $T_2$, $T_3$ and lead wires 61, 62, 63 and 64, made respectively of the thermoelectric materials 1, 2, 3, 4 for acquiring electric thermoelectric junction signals from the thermoelectric junctions $T_1$, $T_2$, $T_3$.

The electric insulator 5 represents a material isolating the electric charges (i.e. electron(s) but not only) from the external environment 6. The said external environment 6 encompasses everything but the embodiment of the invention and its electrical insulator 5.

The manner in which the third embodiment operates to determine the heat flux will now be described.

The voltage produced by the second or third thermoelectric junction $T_2$, $T_3$ may be subtracted from the voltage produced by the first or second thermoelectric junction $T_1$, $T_2$. That signal may be translated to a heat flux after calibration and / or after theoretical consideration. The three thermoelectric junctions $T_1$, $T_2$, $T_3$ allow among others to detect the direction of the heat flux by conduction.

This is achieved by comparing the heat flux from the first two thermoelectric junctions $T_1$, $T_2$ with the heat flux from all three thermoelectric junctions $T_1$, $T_2$, $T_3$ and / or from the second and third thermoelectric junctions $T_2$, $T_3$ and / or from the first and third thermoelectric junctions $T_1$, $T_3$.

In the specific case where the first thermoelectric material 1 and the third thermoelectric material 3 and / or the second thermoelectric material 2 and the fourth thermoelectric material 4 are the same, it is possible to measure a signal proportional to the heat flux with the embodiment by considering it as a cylindrical stack of one and / or two differential thermocouples; measurement is then performed directly across the lead wires 61, 63 made of the first thermoelectric material 1 and / or the corresponding wires 62, 64 made of the second thermoelectric material 2.

In addition to the measurement of a signal proportional to the heat flux, the third embodiment offers the possibility to measure the signal from the first thermoelectric junction $T_1$, the second thermoelectric junction $T_2$ and / or the third thermoelectric junction $T_3$ independently.

This signal can be translated to a temperature value. Among others, the knowledge of the temperature at the junctions used to measure the heat flux allows to account for the material properties (i.e. thermoelectric properties) in the sensitivity (i.e. signal to heat flux ratio) of the heat flux sensor. Therefore, the systematic uncertainty on the measured property (i.e. the heat flux) can be reduced using the embedded temperature measurements.

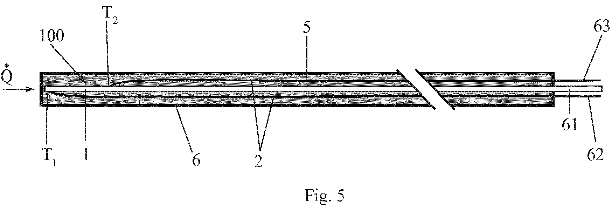

The fourth embodiment of the invention is presented in Fig. 5. A first thermoelectric material 1 is connected to a second thermoelectric material 2 featuring a different Seebeck coefficient from said first thermoelectric material 1 - thus forming the point-like thermoelectric junctions $T_1$ and $T_2$ (here a point like junction corresponds to two wires (approx. 0.5 mm in diameter) welded together in one point). The sensing element comprises two thermoelectric materials 1, 2 and two thermoelectric junctions $T_1$, $T_2$. The electric insulator 5 represents a material isolating the electric charges (i.e. electron(s) but not only) from the external environment 6 (i.e. a protective mantle).

The manner in which the fourth embodiment operates to determine the heat flux will now be described. The voltage produced by second thermoelectric junction $T_2$ may be subtracted from the voltage produced by the first thermoelectric junction $T_1$. The obtained difference signal may be translated to a heat flux after calibration and / or after theoretical consideration. An alternative to measure a signal proportional to the heat flux with the fourth embodiment is to use it as a differential thermocouple; this is achieved by measuring directly the voltage difference across 62 and 63.

In addition to the measurement of a signal proportional to the heat flux, the fourth embodiment offers the possibility to measure the signal from the first thermoelectric junction $T_1$ and / or the second thermoelectric junction $T_2$ independently. This signal can be translated (e.g. by the data processing device 20) to a temperature by appropriate calibration and / or theoretical consideration. The knowledge of the temperature at the thermoelectric junctions $T_1$, $T_2$ used to measure the heat flux allows to account for the material properties (i.e. thermoelectric properties) in the sensitivity (i.e. signal to heat flux ratio) of the heat flux sensor 100. Therefore, the systematic uncertainty on the measured property (i.e. the heat flux) can be reduced using the embedded temperature measurement probes.

In a variation of the fourth embodiment, the segment between the two thermoelectric junctions $T_1$, $T_2$ may be designed as a resistive heating element, such as to dissipate heat by circulating a current (i.e. Joule heating) between lead wires 62 and 63 (see Fig. 14). Once the power supply is switched off, the sensor can be used as a heat flux sensor with embedded temperature measurements.

**Description of a preferred manufacturing method**

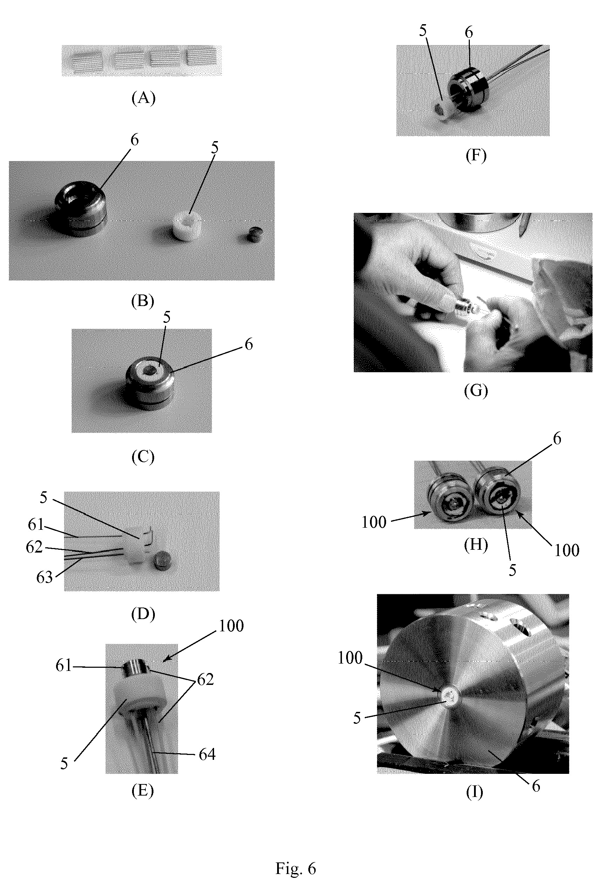

Referring now to Fig. 6A to 6I which show some steps in the manufacturing of a preferred embodiment of the present invention.

The building blocks of the sensing element are layers ($12 \times 8 \times 0.8$mm) of Alumel® (magnetic alloy of 95 mass% nickel, 2 mass% manganese 2 mass%, aluminum and 1 mass% silicon) and Chromel® (alloy of 90 mass% nickel, 10 mass% chromium). Alumel and Chromel are thermoelectric materials 1, 2 which can form thermoelectric junctions.

Nine layers are welded by diffusion (e.g. pressed together with 0.4MPa at 980°C during 120 minutes) to form a stack of alternating K-type thermoelectric materials (see Fig. 6A). A milling machine is used to shape the cylindrical sensing element (5 mm in diameter $\times$3.2 mm) (see Fig. 6B).

A 10 mm in diameter $\times$ 6 mm, high purity aluminum based ceramic (alumina, $Al_2O_3$) is manufactured with precision by diamond machining (grinding and drilling) and serves as an electrical insulator 5 (see Fig. 6C) to the external environment 6 (e.g. mounting aid, see Fig. 6C).

The external environment 6 (18 mm in diameter $\times$ 12 mm) is conventionally machined out of Kovar® (a nickel-cobald-ferrous alloy, e.g. 54 mass% iron, 29 mass% nickel and 17 mass% cobalt) to minimize thermal stresses related to differential expansion.

The lead wires 61, 62, 63, 64 are then prepared (see Fig. 6D) and laser welded, resulting in the heat flux sensor 100 (see Fig. 6E). The heat flux sensor (see Fig. 6F) and the ceramic electrical insulator 5 (see Fig. 6G) are then prepared for soldering (see Fig. 6G). For this purpose, a silver based soldering material (BrazeTec CB10) is used and the process is performed under vacuum (i.e. to prevent oxidation) at 900°C and during 15 minutes. Fig. 6H shows two heat flux sensors 100 with sensing elements. Finally, the heat flux sensor 100 is presented shown in Fig. 6I, flush-mounted to a circular plate.

**Description of six specific applications**

Embodiments of heat flux sensors 100 can be used in a variety of systems, in particular fluid systems. The following are just given as indication for the broad possible range of applications.

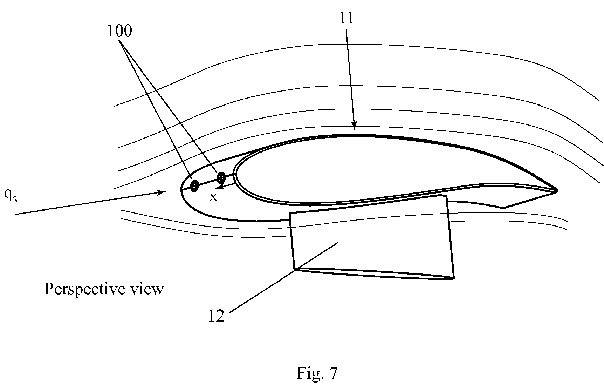

Fig. 7 shows a NACA6713 profile 11 as is e.g. used in gas turbines blades, aircraft wings, spacecraft wings, etc. on a test bench 12 facing a mixed heat flux source $q_3$ simulating the harsh conditions (i.e. high temperature, high heat flux, oxidative environment, high pressure) potentially encountered:

(1) when a space craft re-enters the atmosphere,
(2) on the blades of a gas turbine and
(3) on the blades of a jet engine.

An array of heat flux sensors is positioned on the leading edge of the profile 11 to characterize the local heat flux ($q(x)$), surface temperature, heat transfer coefficient and / or Nusselt number.

The surface temperature distribution ($T(x)$) together with the absorbed heat flux allows to reconstruct the time-dependent temperature distribution in the whole profile 11 assuming a boundary condition (e.g. temperature and / or heat flux) on the rest or disposing additional universal heat flux sensors. Therefore, the influence of different material on the temperature distribution and / or the thermal stresses in the profile can be monitored and analyzed.

During application, e.g. real flight, hush house engine tests or combustion tests the heat flux sensors 100 can be used to monitor the absorbed heat flux and the surface temperature. The data can be acquired using a data-logger, and or, transmitted wirelessly.

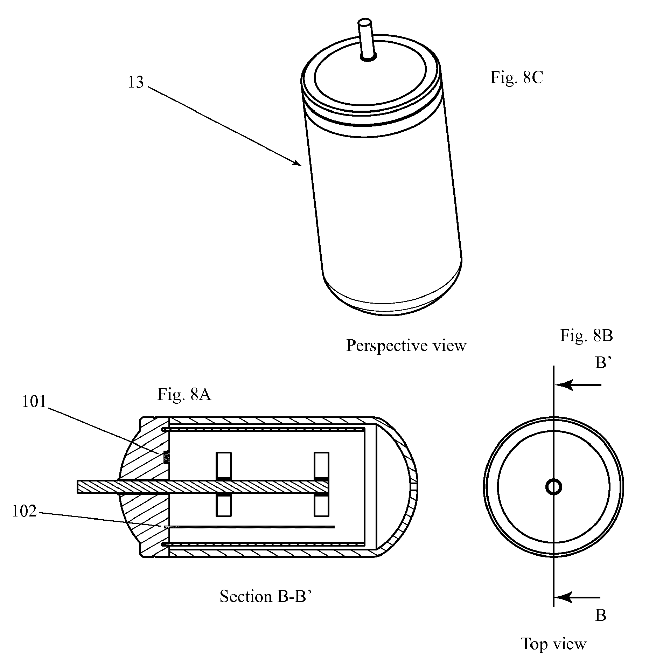

Fig. 8A to 8C depicts a vessel 13 (e.g. chemical reactor, pressure vessel, nuclear reactor) with a stirrer. The vessel is additionally equipped with two heat flux sensors 101, 102 of the present invention (best seen in Fig. 8A). The first heat flux sensor 101 permits the evaluation of the thermal energy dissipated by the chemical reaction and / or the stirrer blades which leaves the vessel by its upper part. The heat flux and the surface temperature of the material can be used to control (e.g. manual or automatic control) the mass flow of reactants entering the reaction zone with respect to the thermal stresses the vessel can be exposed to.

The second heat flux sensor 102 allows to measure with only one sealing the temperature profile (e.g. two, three, or more thermoelectric junctions) along the axis of the stirrer. This information can be used to control the concentration of the reactants entering the reaction zone and the mixing rate (e.g. stirring frequency).

Based on the information provided by one, two, or more heat flux sensors 101, 102, the chemical reaction can be monitored and controlled efficiently. As the heat flux sensor (i.e. 101, 102) of the present invention is self-powered, it can be used in explosive environment (e.g. hydrogenation, oxidation, etc.) without ignition risk due to a deficient electrical connection or a faulty sensor.

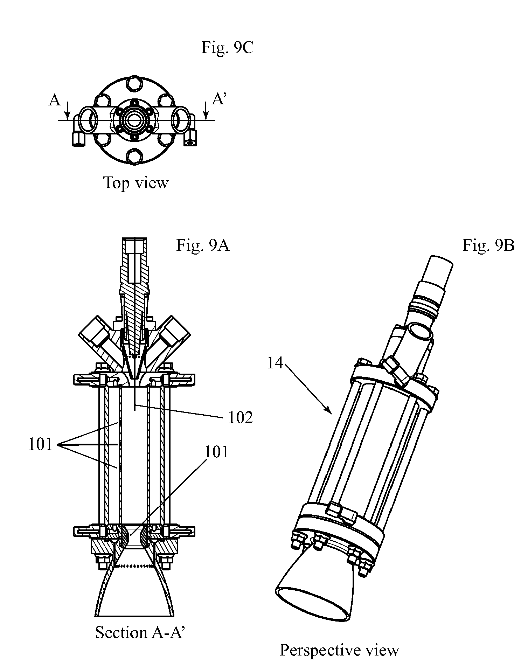

Referring now to Fig. 9A to 9C showing a combustion chamber 14, as it is known e.g. from a dry turbine combustion, wet turbine combustion, turbojet combustion, a steam boiler or an industrial boiler. The combustion chamber 14 is equipped (best seen in Fig. 9A) with a number of heat flux sensors 101, 102. The array of first heat flux sensors 101 allows to characterize the heat transfer and the wall temperature at different locations along the combustion chamber 14. The second heat flux sensor 102 allows:

(1) to ignite the flame by circulating a current across the second heat flux sensor 102 (i.e. Joule heating) and
(2) to measure the axial temperature profile in the combustion chamber 14 when using the embodiment according to the present invention.

To switch between the two modes, a solid state relay in the circuitry can be installed. Both heat flux sensors 101, 102 allow an analysis of the combustion without optical access (e.g. flame front position, temperature profile, etc.).
The second heat flux sensor 102 can also be used specifically to ignite flames in liquid-like environment:

(1) in supercritical water oxidation, where an aqueous organic mixture is oxidized at elevated pressure, i.e. beyond the mixture critical pressure, in favor of the solvation properties of supercritical water, and,
(2) in flame-jet drilling, where a flame burning in a water-like environment is to be ignited.

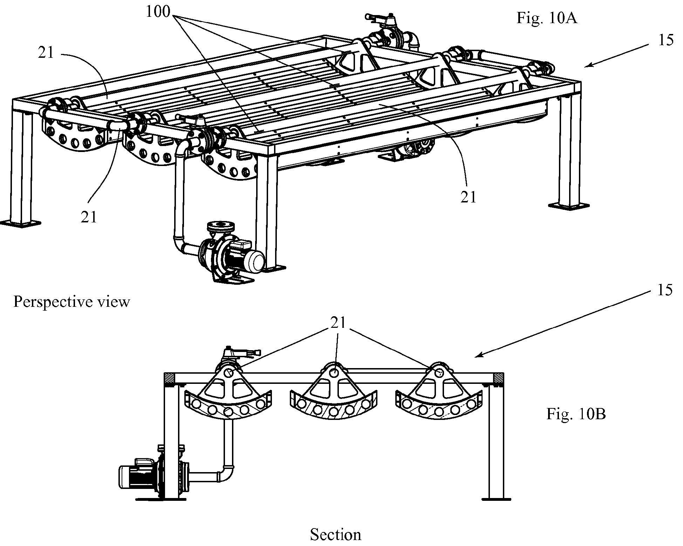

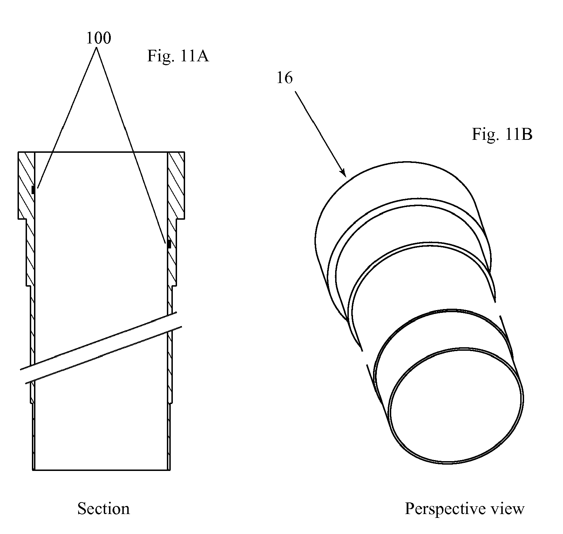

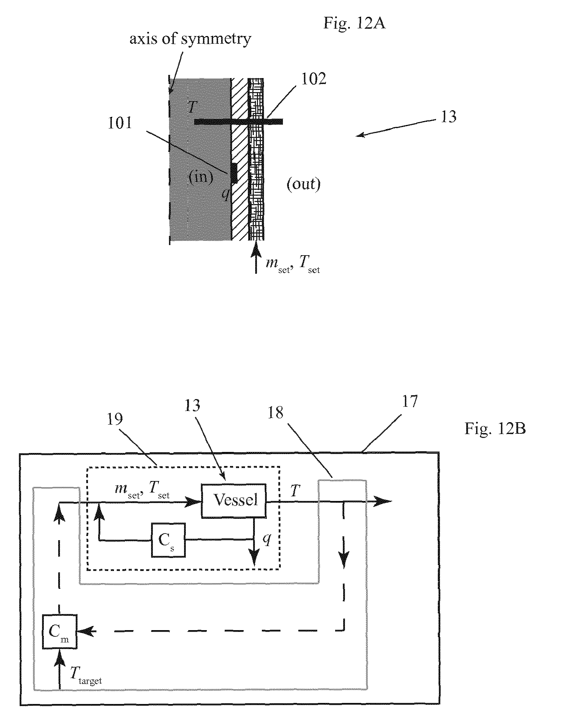

Referring now to Fig. 10A and 10B showing a concentrated solar power installation 15. The concentrated solar system 15 uses mirrors with tracking systems to focus a large area of sunlight onto a piping system 21. The concentrated light is transferred to the liquid (e.g. water) and transformed conventionally into electricity (e.g. expanded in a turbine). Additionally, the unit is equipped with three heat flux sensors 100. These allow to measure the heat flux through the piping system 21 of the concentrated solar installation and to measure the surface temperature of the piping system 21. The heat flux permits to acquire information on the thermal fatigue of the piping material and to adjust the pumping speed in order to match the power generator needs and the sunlight conditions.
Referring now to Fig. 11 which shows a well casing 16 (e.g. a wall casing for a geothermal well) equipped with two heat flux sensors 100. The two heat flux sensors 100 are positioned at different locations in the casing and permit to monitor the absorbed heat flux in the heat flux sensors 100 (i.e. the heat flow through the wall casing 16). The measured data allows for instance to adjust the pumping speed and to improve the well insulation as necessary (e.g. liner, insulation layer).
Referring now to Fig. 12A and Fig. 12B which refer to a vessel 13 equipped with a heating jacket. In Fig. 12A a part of a section through the wall of the vessel 13 is shown. Two heat flux sensors 101, 102 are used to gather heat flux measurement data. A first heat flux sensor 101 is positioned on the inner side of the wall of the vessel 13, the second heat flux sensor 102 extents into the cavity of the vessel 13.
The temperature of the vessel 13 is controlled with a cascade loop 17 shown in Fig. 12B utilizing the two heat flux sensors 101 and 102 (e.g. used as a thermocouple, i.e. using one of its thermoelectric junctions). In this case, the master loop 18:

(1) reads the vessel fluid temperature (T) from the second heat flux sensor 102,
(2) compares it to target and,
(3) changes the heating medium temperature $T_{set}$ accordingly.

The slave loop 19, characterized by a time constant smaller than the master loop:

(1) reads and calculates the wall heat flux (q) utilizing first heat flux sensor 101 and,
(2) changes the heating medium mass flow rate ($m_{set}$) as necessary.

The main reason to use cascade control in this system is to maintain the vessel temperature at a specific value, despite some fluctuations in the energy consumed by the chemical reaction (e.g. changes in the feed concentration, deactivation of the catalyst, etc.).

<div align="center">

**Reference numbers**

</div>

| | |
|---|---|
| 1 | 1st thermoelectric material |
| 2 | 2nd thermoelectric material |
| 3 | 3rd thermoelectric material |
| 4 | 4th thermoelectric material |
| 5 | Electrical insulator |

(continued)

| 6 | External environment (e.g. mounting aid, mantle, protection, target of the flame-jet in the example problem) |
|---|---|
| 11 | Wing profile |
| 12 | Test bench |
| 13 | Vessel |
| 14 | Combustion chamber |
| 15 | Concentrated solar power (CSP) |
| 16 | Well casing |
| 17 | Cascade control loop |
| 18 | Master loop |
| 19 | Slave loop |
| 20 | Data processing device |
| 21 | Piping system |
| 100 | Heat flux sensor |
| 101 | First heat flux sensor |
| 102 | Second heat flux sensor |

| $T_1$ | 1st thermoelectric junction |
|---|---|
| $T_2$ | 2nd thermoelectric junction |
| $T_3$ | 3rd thermoelectric junction |

| $\dot{Q}$ | Heat flux to heat flux sensor |
|---|---|
| $q_1(x)$ | 1st heat flux distribution |
| $q_2(x)$ | 2nd heat flux distribution |
| $q_3(X)$ | Heat flux distribution over the wing profile |
| 61 | 1st lead wire |
| 62 | 2nd lead wire |
| 63 | 3rd lead wire |
| 64 | 4th lead wire |

**Claims**

1. Heat flux sensor (100), comprising at least one sensing element consisting of thermoelectric materials (1, 2, 3, 4) having at least two thermoelectric junctions ($T_1$, $T_2$, $T_3$) between thermoelectric materials (1, 2, 3, 4), with a means, in particular at least three lead wires (61, 62, 63, 64) for acquiring at least two electric thermoelectric junction signals independently from the at least two thermoelectric junctions ($T_1$, $T_2$, $T_3$), the acquired electric thermoelectric junction signals being transmittable to data processing device (20) for determining heat flux data.

2. Heat flux sensor of claim 1, wherein the means for acquiring the electric thermoelectric junction signals, in particular the at least three lead wires, solely consists of thermoelectric materials (1, 2, 3, 4) matching the thermoelectric materials (1, 2, 3, 4) of the at least one sensing element.

3. Heat flux sensor of claim 1, wherein the temperature of at least one of the thermoelectric junctions ($T_1$, $T_2$, $T_3$) is used to correct the sensitivity of the heat flux sensor (100) with respect to temperature.

4. Heat flux sensor according to at least one of the preceding claims, wherein the temperature of at least two thermo-electric junctions ($T_1$, $T_2$, $T_3$) is used to cross-check the value of the heat flux determined from measurement by the sensing element, in particular based on Fourier's law or an empirical relation between the heat flux and the temperature distribution.

5. Heat flux sensor according to at least one of the preceding claims, wherein said thermoelectric junctions ($T_1$, $T_2$, $T_3$) have defined contact area, in particular a point-like contact area, an annular contact area, or surface-like contact area.

6. Heat flux sensor according to at least one of the preceding claims, wherein said thermoelectric junctions ($T_1$, $T_2$,

$T_3$) are positioned symmetrically in the at least one sensing element to minimize its sensitivity to an asymmetric temperature distribution in the heat flux sensor 100 or said thermoelectric junctions ($T_1$, $T_2$, $T_3$) are positioned asymmetrically in the sensing element such as to maximize its sensitivity to an asymmetric temperature distribution in the heat flux sensor 100.

7. Heat flux sensor according to at least one of the preceding claims, wherein a part of the at least one sensing element is designed to be used as a heating element, in particular Joule heating, when current is flowing through it.

8. Heat flux sensor according to at least one of the preceding claims, wherein at least one thermoelectric material (1, 2, 3, 4) is used as a thermistor to measure temperature.

9. Heat flux sensor according to at least one of the preceding claims, wherein the at least one sensing element and / or the electric insulator (5) have defined surface geometries, in particular concave or convex.

10. Heat flux sensor according to at least one of the preceding claims, wherein different thermoelectric materials (1, 2, 3, 4) are connected by diffusion welding.

11. Heat flux sensor according to at least one of the preceding claims, wherein an electrical insulator (5), in particular separating electrically the at least one sensing element and its external environment (6), is connected to the sensing element by vacuum soldering.

12. Heat flux sensor according to at least one of the preceding claims, wherein lead wires (61, 62, 63, 64) are connected to the sensing element by laser welding.

13. Heat flux sensor according to at least one of the preceding claims, comprising at least one sensing element consisting of thermoelectric materials (1, 2, 3, 4) having at least two consecutive thermoelectric junctions ($T_1$, $T_2$, $T_3$) without insulating elements separating spatially the arrangement of the at least two consecutive thermoelectric junctions ($T_1$, $T_2$, $T_3$), with a means, in particular at least three lead wires (61, 62, 63, 64) for acquiring at least two electrical thermoelectric junction signals independently from the at least two thermoelectric junctions ($T_1$, $T_2$, $T_3$), the acquired electric thermoelectric junction signals being transmittable to data processing device (20) for determining heat flux data.

14. System coupled with at least one heat flux sensor according to at least one of the claims 1 to 13 for determining the incident heat flux, the temperature, the temperature profile and / or the dissipated heat, wherein the system comprises at least one aerodynamic profile, at least one gas turbine blade, at least one spacecraft wing, at least one aircraft wing, a chemical reaction vessel, a reaction vessel with a stirrer system, a nuclear reactor, a piping system of a concentrated solar installation, a well casing, in particular a geothermal well, and / or a control system, in particular a cascade control loop to improve the control quality of a system.

15. System coupled with at least one heat flux sensor according to at least one of the claims 1 to 13 for analyzing a combustion system, in particular without optical access, specifically:

(a) to characterize the heat transfer and the wall temperature at different locations along a combustion chamber, and / or to measure the axial temperature profile in a combustion chamber or for igniting a flame in a water-like environment as in:
(b) supercritical water oxidation,
(c) flame-jet drilling.

Fig. 1

Fig. 2A

Fig. 2C

Section B-B'

Section A-A'

Fig. 2B

axis of symmetry

Fig. 3C

Fig. 3A

Section B-B'

Top view

Section A-A'

Fig. 3B

axis of symmetry

Fig. 4A

Top view

Section A-A'

Fig. 4B

axis of symmetry

Fig. 4C

Section B-B'

Section C-C'

Fig. 4D

Fig. 5

Fig. 6

Fig. 7

13

Fig. 8C

Perspective view

Fig. 8B

B'

101

Fig. 8A

102

Section B-B'

B

Top view

Fig. 9C

A &darr;                    &darr; A'

Top view

Fig. 9A                                        Fig. 9B

102

101

101

14

Section A-A'

Perspective view

100

21

21

Fig. 10A

15

21

Perspective view

15

21

Fig. 10B

Section

100

Fig. 11A

16

Fig. 11B

Section

Perspective view

Fig. 12A

axis of symmetry

101

102

13

$T$

(in)

$q$

(out)

$m_{set}$, $T_{set}$

19

13

18

17

Fig. 12B

$m_{set}$, $T_{set}$

Vessel

$T$

$C_s$

$q$

$C_m$

$T_{target}$

Fig. 13

5

natural
convection

100

Fig. 14

axis of symmetry

100

$T_1$

$O_{rz}$

62

2

1

61

6

$T_2$

5

l

63

Fig. 15

Europäisches
Patentamt

European
Patent Office

Office européen
des brevets

# EUROPEAN SEARCH REPORT

Application Number

EP 15 17 2645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/094658 A1 (SIEMENS ENERGY INC [US]; SUBRAMANIAN RAMESH [US]; KULKARNI ANAND A [US) 4 August 2011 (2011-08-04) * page 8, line 14 - page 12, line 2; figures 8-10 * ----- | 1-15 | INV. G01K17/02 G01K17/20 |
| X | US 2007/227576 A1 (GAMBINO RICHARD J [US] ET AL) 4 October 2007 (2007-10-04) * paragraphs [0030] - [0032]; figure 5 * ----- | 1-5,7,8, 10,13-15 | |
| A | US 2005/259719 A1 (PHILLIPS RICHARD W [US]) 24 November 2005 (2005-11-24) * paragraphs [0049] - [0052]; figures 5a-5d * ----- | 1-15 | |
| A | US 4 050 302 A (HAUPIN WARREN E) 27 September 1977 (1977-09-27) * column 5, line 6 - column 7, line 33; figures 2-5 * ----- | 1-15 | |

TECHNICAL FIELDS
SEARCHED      (IPC)

G01K

The present search report has been drawn up for all claims

| Place of search | Date of completion of the search | Examiner |
|---|---|---|
| The Hague | 15 December 2015 | Franche, Vincent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 17 2645

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2015

| Patent document cited in search report | | Publication date | Patent family member(s) | | Publication date |
|---|---|---|---|---|---|
| WO 2011094658 | A1 | 04-08-2011 | CA | 2788506 A1 | 04-08-2011 |
| | | | CN | 102782258 A | 14-11-2012 |
| | | | EP | 2529085 A1 | 05-12-2012 |
| | | | JP | 5619183 B2 | 05-11-2014 |
| | | | JP | 2013518215 A | 20-05-2013 |
| | | | KR | 20120116009 A | 19-10-2012 |
| | | | US | 2011222582 A1 | 15-09-2011 |
| | | | WO | 2011094658 A1 | 04-08-2011 |
| US 2007227576 | A1 | 04-10-2007 | EP | 2008068 A2 | 31-12-2008 |
| | | | US | 2007227576 A1 | 04-10-2007 |
| | | | WO | 2007115257 A2 | 11-10-2007 |
| US 2005259719 | A1 | 24-11-2005 | DE | 102005023869 A1 | 22-12-2005 |
| | | | FR | 2870596 A1 | 25-11-2005 |
| | | | NO | 336819 B1 | 02-11-2015 |
| | | | US | 2005259719 A1 | 24-11-2005 |
| | | | US | 2006227849 A1 | 12-10-2006 |
| US 4050302 | A | 27-09-1977 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5990412 A

**Non-patent literature cited in the description**

- **CHILDS, P. R. N. ; J. R. GREENWOOD ; C. A. LONG.** Heat flux measurement techniques. *Proceedings of the Institution of Mechanical Engineers, Part C: Journal of Mechanical Engineering Science,* 1999, vol. 213.7, 655-677
- Standard Test Method for Measuring Heat Flux Using a Water-Cooled Calorimeter. *ASTM E422 - 05,* 2011
- **GARDON, ROBERT.** An instrument for the direct measurement of intense thermal radiation. *Review of Scientific Instruments,* 1953, vol. 24.5, 366-370
- **ZAHNER, TH ; R. FÖRG ; H. LENGFELLNER.** Transverse thermoelectric response of a tilted metallic multilayer structure. *Applied Physics Letters,* 1998, vol. 73.10, 1364-1366
- **GIFFORD, ANDREW R. et al.** Durable heat flux sensor for extreme temperature and heat flux environments. *Journal of Thermophysics and Heat Transfer,* 2010, vol. 24.1, 69-76